# EUROPÄISCHE PATENTSCHRIFT

(11) **EP 0 303 239 B1**
(45) Veröffentlichungstag und Bekanntmachung des Hinweises auf die Patenterteilung: **04.08.1993**
(21) Anmeldenummer: 88112957.1
(22) Anmeldetag: 10.08.1988
(51) Int. Cl.: F16F 15/16, F16D 31/04

(54) **Vorrichtung zur Änderung der zeitlichen Durchflussmenge eines flüssigen Dämpfungsmittels bei einem Drehschwingungsdämpfer**
Device for modifying the delivery of a damping fluid for a rotational vibration damper
Dispositif pour modifier le débit d'écoulement d'un fluide d'amortissement pour un amortissement de vibrations de rotation

(30) Priorität: 13.08.1987 DE 3726926
(43) Veröffentlichungstag der Anmeldung: 15.02.1989
(73) Patentinhaber: Rohs, Ulrich, Dr.-Ing., D-52351 Düren (DE)
(72) Erfinder: Rohs, Ulrich, Dr.-Ing., D-5160 Düren (DE); Voigt, Dieter, Dr.-Ing., D-5100 Aachen (DE)
(74) Vertreter: Rauh, Wolfgang Kurt

(56) Entgegenhaltungen:
- DE-C- 523 555
- FR-A- 1 189 485
- US-A- 4 091 901
- US-A- 4 248 332

## Beschreibung

Die Erfindung betrifft eine Vorrichtung zur Änderung der zeitlichen Durchflußmenge eines flüssigen Dämpfungsmittels bei einem Drehschwingungsdämpfer, insbesondere für Kolbenmotoren in dessen mit der An- bzw. Abtriebswelle verbundenem, umlaufenden zylindrischen Dämpfergehäuse Stirnzahnräder planetenartig gelagert sind und, mit einem auf der Ab- bzw. Antriebswelle sitzenden, zentralen Stirnzahnrad in Eingriff stehend, eine Zahnradpumpe für einen geschlossenen Kreislauf des Dämpfungsmittels bilden, mit einer Speicherkammer in der Förderleitung für das Dämpfungsmittel auf der jeweiligen Druckseite.

Bei Kolbenmotoren entstehen bekanntlich Drehschwingungen und zwar im Leerlauf das sogenannte Leerlaufzittern (idle rattle), dann bei ca. 1500 bis 2200 U/min sehr starke Vollastschwingungen durch den Anlagewechsel der Getriebezahnräder sowie ein sogenanntes Hochgeschwindigkeitszittern bei sehr hohen Drehzahlen über 2200 U/min. Außer diesen drehzahlabhängigen Drehschwingungen kennt man noch den sogenannten "Bonanza-Effekt", bei dem es sich um niederfrequente Drehschwingungen handelt, die beim Einkuppeln des Abtriebstranges auftreten. Unter der Last wird der Abtriebsstrang gewissermaßen wie eine Torsionsfeder aufgezogen und verursacht eine entsprechende Drehschwingung.

Aus der GB-A 294 015 ist ein Drehschwingungsdämpfer nach dem Oberbegriff von Anspruch 1 bekannt, der s.Zt. für Schiffsmotoren entwickelt und auch nur für diese eingesetzt wurde.

Aus der US-4 248 332 A ist eine Fliehkraftkupplung bekannt, bei der in einem umlaufenden, antriebsseitigen Gehäuse Stirnzahnräder planetenartig gelagert sind und mit einem auf der Abtriebswelle sitzenden zentralen Stirnzahnrad in Eingriff stehend Zahnradpumpen für ein flüssiges Kupplungsmedium bilden. Am Antriebsglied sind an den Ein- und Auslaßseiten der Zahnradpumpen Schließventile angeordnet, die jedoch keine Zwischenstellung zulassen. Schwingungsenergie wird dabei nicht vernichtet. Die Schließventile schließen, sobald eine hohe Antriebsdrehzahl vorliegt und die Kupplung geschlossen wird. Es handelt sich somit nicht um einen Drehschwingungsdämpfer.

Im Gegensatz zu Fahrzeugmotoren arbeiten Schiffsmotoren im wesentlichen mit einer einzigen Drehzahl, während die übrigen Betriebszustände ohne Bedeutung sind. Somit läßt sich das zu übertragende Drehmoment ziemlich genau auslegen. Für einen Schiffsantrieb ist der bekannte Sandner-Dämpfer durchaus brauchbar.

Ganz anders verhält es sich jedoch bei Fahrzeugmotoren. Hierbei ist das Drehmoment drehzahlabhängig und erreicht etwa bei der halben Maximaldrehzahl sein Maximum. Bei Fahrzeugmotoren kommt es darauf an, mit Drehschwingungsdämpfern eine wirksame Schwingungsdämpfung im ganzen Motorkennfeld zu erreichen, selbst im Schubbetrieb (Abwärtsfahrt), den es bei Schiffen nicht gibt.

Demgemäß ist es Aufgabe der Erfindung, eine Vorrichtung zu schaffen, die so auf den Drehschwingungsdämpfer einwirkt, daß er mindestens alle drehzahlabhängigen Drehschwingungsbereiche, nämlich:

| | | |
|---|---|---|
| Leerlauf | niedrige Drehzahl | Md=0 |
| Anfahrbeschleunigung | niedrige Drehzahl | Md=hoch |
| Hochgeschwindigkeitsfahrt | hohe Drehzahl | Md=hoch |
| Schubbetrieb | hohe Drehzahl | Md=negativ |
| Schaltvorgänge | hohe Drehzahl | Md=veränderlich |

bedient, was mit dem bekannten Sandner-Dämpfer nicht möglich ist.

Die Lösung dieser Aufgabe besteht erfindungsgemäß in den kennzeichnenden Merkmalen des Anspruches 1.

Während die Kolbenventile bei der erfindungsgemäßen Vorrichtung drehzahlabhängig gesteuert sind und dementsprechend als drehzahlabhängige Drosselventile arbeiten, handelt es sich beim Sandner-Dämpfer lediglich um Ventile, die die Fließrichtung des Dämpfungsmittels sicher stellen sollen. Die Kolben dieser Ventile sind daher axial angeordnet und bewegen sich demgemäß allein in Abhängigkeit vom Flüssigkeitsdruck.

Die Änderung der zeitlichen Durchflußmenge des Dämpfungsmittels kann in einer zeitweisen Entnahme des Dämpfungsmittels in einen Speicher, in einer zusätzlich zur Strömungsreibung wirksamen Drosselung durch eine Querschnittsveränderung der Förderleitung oder in einer Kombination beider Maßnahmen bestehen.

Im erstgenannten Fall erfolgt eine Verminderung der Schwingungsamplituden im Sinne einer Federung bei gleichzeitiger Dämpfung durch die ohnehin vorhandene Strömungsreibung, die durch die zugeordnete Federung wirksamer wird. Im zweiten Fall erfolgt die Dämpfung durch Erhöhung der Strömungsreibung, d.h. Energievernichtung durch zusätzliche Drosselung.

In den Unteransprüchen sind praktische Ausführungsformen des im Anspruch 1 genannten Lösungsprinzips angegeben. Danach ist es vorteilhaft, sowohl eine Federung durch Speicher als auch eine Dämpfung durch Drosselventile vorzusehen. Hierdurch wird eine besonders günstige Dämpfung der drehzahlabhängigen Drehschwingungen erzielt.

Zur zusätzlichen Dämpfung der als "Bonanza-Effekt" bekannten niederfrequenten und durch den Abtriebsstrang erzeugten, insbesondere beim Kuppeln bewirkten Drehschwingungen wird gemäß weiterer Ausgestaltung der Erfindung vorgeschlagen, daß zwischen jeder Druck- und Saugseite der Förderleitung bzw. ihrer zwischen zwei Stirnzahnradpaaren gelegenen Teilabschnitte eine durch ein Überdruckventil abgeschlossene, das Kolbenventil überbrückende Kurzschlußverbindung vorgesehen ist.

Das Überdruckventil öffnet diese Kurzschlußverbindung durch den beim Kuppeln auftretenden plötzlichen Anstieg des Drehmoments bzw. des diesem entsprechenden Förderdruckes in der Förderleitung und dämpft dabei diese niederfrequente Drehschwingung.

Eine vorteilhafte, weil konstruktiv günstige Bauweise ist im Anspruch 7 angegeben, nach dem der erfindungsgemäße Drehschwingungsdämpfer zugleich eine praktisch verschleißfreie Kupplung zwischen der Antriebsmaschine und dem Abtriebsstrang bildet und alle Drehschwingungsbereiche abdeckt.

Die Erfindung ist nachstehend beispielsweise anhand der Zeichnung näher erläutert. Es zeigen:
- Fig.1: eine schematische Draufsicht auf einen Drehschwingungsdämpfer mit einer Vorrichtung nach der Erfindung
- Fig.2.: einen Querschnitt durch das Gehäuse des Drehschwingungsdämpfers der Fig.1
- Fig.3.: einen Längsschnitt nach der Linie III-III in Fig.2,
- Fig.4-7: ein im Drehschwingungsdämpfer vorgesehenes, fliehkraftabhängiges Kolbenventil in verschiedenen Betriebszuständen: Stillstand, Leerlauf, Vollast, Hochgeschwindigkeitslauf
- Fig.8: einen Längsschnitt durch eine bevorzugte Ausführungsform eines Drehschwingungsdämpfers mit der erfindungsgemäßen Vorrichtung.

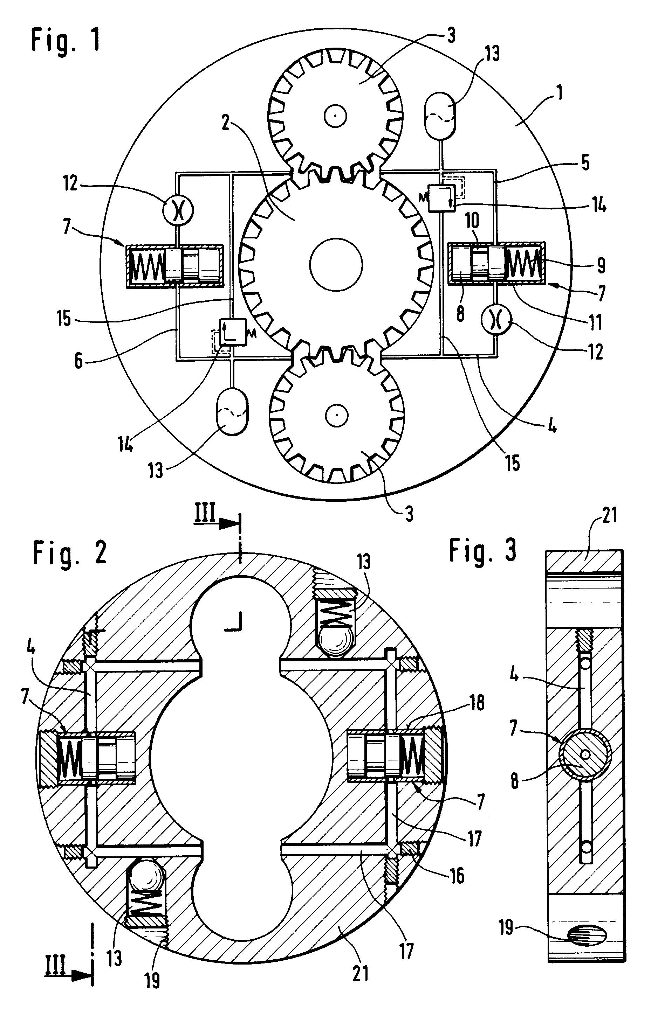

Der schematisch in Fig.1 dargestellte Drehschwingungsdämpfer besteht aus einem Dämpfergehäuse 1, einem darin angeordneten, zentralen Stirnzahnrad 2 und mindestens zwei planetenartig angeordneten, mit diesem Stirnzahnrad 2 kämmenden Stirnzahnrädern 3, einer die Zahnradpaare 2,3 von der Druckzur Saugseite des folgenden Zahnradpaares verbindenden, insgesamt einen geschlossenen Pumpenkreislauf bildenden Förderleitung 4 für ein flüssiges Dämpfungsmedium und mit dieser Förderleitung 4 verbundenen Steuereinrichtungen, die noch erläutert werden. Die Stirnzahnräder 2,3 bilden gemeinsam eine Zahnradpumpe.

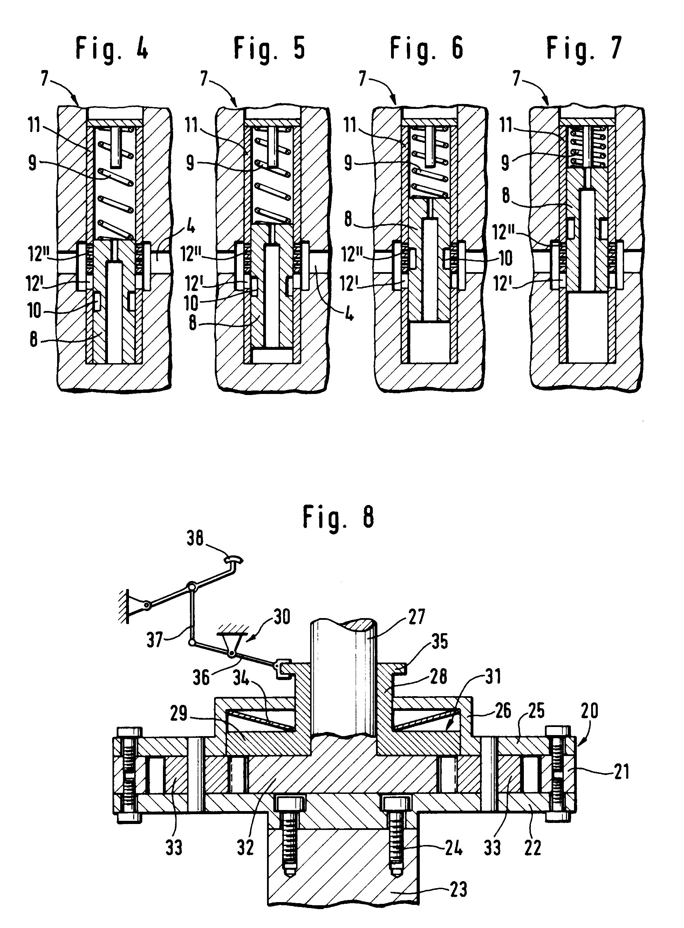

Die Förderleitung 4 besteht aus identischen Teilabschnitten 5,6 zwischen jeweils zwei Stirnzahnradpaaren 2,3. In jedem Teilabschnitt 5 bzw. 6 der Förderleitung 4 befindet sich als Einrichtung zur Änderung der zeitlichen Durchflußmenge des Dämpfungsmittels ein den Durchfluß der Förderleitung sperrendes bzw. freigebendes, radial angeordnetes Kolbenventil 7, dessen im Ventilgehäuse 11 freibeweglicher Kolben 8 aus einer ruhenden inneren Schließstellung (Fig.4) unter der Wirkung der Fliehkraft gegen die Wirkung einer Rückstellfeder 9 in eine äußere Schließstellung bewegbar ist (Fig.7).

Der Kolben 8 weist eine mittlere Durchtrittsöffnung 10, z.B. eine Einschnürung, für das Dämpfungsmittel auf. Das Ventilgehäuse 11 hat im Bereich des Anschlusses der Förderleitung 4 in seiner Wandung Durchgangsöffnungen, die in Fig.1 schematisch als Drosseln 12 (neben dem Kolbenventil) angegeben sind. Diese Durchgangsöffnungen werden bei axialer Bewegung des als Drosselstellglied wirkenden Kolbens 8 mehr oder weniger für den Durchtritt des Dämpfungsmittels freigegeben und haben eine Querschnittsform, die der jeweiligen Dämpfungscharakteristik der zu dämpfenden Maschine angepaßt ist. Die Durchtrittsöffnungen 12 können aus einer Anzahl Perforationen ggf. unterschiedlichen Durchmessers oder aus einem Längsschlitz mit ggf. nicht parallelen Seiten ausgebildet sein.

In den Fig.4 bis 7 ist ein Kolbenventil 7 in vier verschiedenen Betriebszuständen dargestellt. Fig.4 zeigt es bei Stillstand der Maschine. Der Durchfluß des Dämpfungsmittels in der Förderleitung ist durch den radial äußeren (in der Zeichnung oberen) Teil des Kolbens 8 gesperrt. In der in Fig.5 gezeigten Leerlaufstellung ist der Kolben 8 soweit radial nach außen verschoben, daß seine Einschnürung 10 eine relativ große Durchtrittsöffnung 12′ freigibt, d.h. die Förderleitung 4 ist schwach gedrosselt. Bei weiterer Erhöhung der Drehzahl, z.B. in den Bereich von 1500 bis 2200 U/min sperrt der radial innere Teil des Kolbens 8 bereits die Durchtrittsöffnungen 12′ und die Einschnürung 10 gibt lediglich einen der Dämpfungscharakteristik entsprechenden geringeren Querschnitt der Förderleitung 4 durch die Durchtrittsöffnungen 12˝ frei. (Fig.6) Bei Erreichen von Drehzahlen über 2200 U/min, d.h. im Hochgeschwindigkeitsbereich wird die Förderleitung 4 vom inneren Teil des Kolbens 8 wieder gänzlich gesperrt.

Bei Verringerung der Drehzahl bewegt sich der Kolben 8 infolge der geringeren Fliehkraft und unter der zusätzlichen Wirkung der Rückstellfeder 9 wieder radial nach innen, bis er bei Stillstand seine innere Schließstellung erreicht hat.

Da infolge der Drehschwingungen die Druckbeanspruchung in der Förderleitung 4 ebenfalls periodisch wechselt, ist in jedem Teilabschnitt 5,6 der Förderleitung 4 eine weitere Einrichtung zur Änderung der zeitlichen Durchflußmenge in der Form einer Speicherkammer 13 vorgesehen. Diese ist druckseitig, d.h. in Förderrichtung vor der Drossel 12 angeordnet und besteht beispielsweise aus einem Blasen- oder Membranspeicher, der bei Druckanstieg zeitweilig einen Teil des Dämpfungsmediums aus der Förderleitung 4 aufnimmt und nach Ablauf der Druckspitze wieder abgibt. Der Speicher wirkt ähnlich wie ein Windkessel und im Dämpfungssystem wie eine, die Schwingungsamplituden verringernde Feder. In Verbindung mit der Flüssigkeitsreibung in der Förderleitung 4 würde in bestimmten Fällen schon eine solche Speicherkammer 13 genügen und könnte das Kolbenventil 7 gegegebenenfalls entfallen. In der bevorzugten Ausführung sind sie jedoch beide vorgesehen und bilden miteinander eine sinnvolle Kombination zur Erzielung eines Höchstmaßes an Schwingungsdämpfung.

Um den oben erwähnten "Bonanza-Effekt" zu vermeiden, bei dem beim Einkuppeln des Abtriebsstranges drehzahlunabhängige, niederfrequente Drehschwingungen auftreten, ist eine durch ein Überdruckventil 14 gesicherte Kurzschlußverbindung 15 vorgesehen, die das Kolbenventil 7 zwischen der Druck- und der Saugseite des Teilabschnittes 5 bzw.6 überbrückt. Beim Einkuppeln erfolgt eine fast stoßartige Steigerung des Drehmoments bzw. des über die Stirnzahnräder 2,3 in die Förderleitung 4 gegebenen Druckes, durch die das Überdruckventil 14 kurzzeitig geöffnet wird. Dabei wird ein wesentlicher Teil des Dämpfungsmittels am Kolbenventil 7 vorbei dem nächstfolgenden Stirnzahnradpaar 2,3 zugeführt.

Die Fig.2 und 3 zeigen ein praktisches Ausführungsbeispiel für einen Drehschwingungsdämpfer mit der erfindungsgemäßen Vorrichtung zur Änderung der zeitlichen Durchflußmenge des Dämpfungsmittels.

Die Zeichnung zeigt den Mittelteil 21 des Dämpfergehäuses 1, der aus einer kreisrunden Platte besteht, deren Stärke der axialen Ausdehnung der Zahnräder 2,3 entspricht, die hier nicht dargestellt sind. Dieser Mittelteil 21 wird von einem nicht dargestellten Boden und einem ebenfalls nicht dargestellten Deckel verschlossen, in denen die planetenartig angeordneten Stirnzahnräder 3 gelagert sind. Das Dämpfergehäuse 1 ist entweder mit der Antriebswelle oder mit der Abtriebswelle der zu dämpfenden Maschine fest verbunden und läuft mit dieser um. Das zentrale Stirnzahnrad 2 ist dementsprechend mit der Abtriebs- bzw. Antriebswelle verbunden.

Die Förderleitung 4 kann beispielsweise durch mittels Schrauben 16 verschließbare Bohrungen 17 im Mittelteil 21 gebildet sein. Für die Anordnung der Kolbenventile 7 sind Querbohrungen 18 größeren Durchmessers vorgesehen, die die Bohrungen 17 kreuzen und in die die Kolbenventile 7 radial von außen einsteckbar sind. In ähnlicher Weise sind auch Querbohrungen 19 für die Aufnahme der Speicherkammern 13 vorgesehen, die hier schematisch als federbelastete Kugelventile dargestellt sind.

Fig.8 zeigt eine weitere praktische Ausführungsform eines Drehschwingungsdämpfers mit der erfindungsgemäßen Vorrichtung zur Änderung der zeitlichen Druchflußmenge des Dämpfungsmittels mit einem Überdruckventil, bei dem dieses durch den beim Kuppeln entstehenden Überdruck und die zusätzliche Betätigung des Kupplungsgestänges 30 geöffnet wird.

Gleichzeitig ist bei dieser Ausführung der Drehschwingungsdämpfer so in die Kupplung integriert, daß eine praktisch verschleißfreie Kupplung gebildet ist.

Die Zeichnung zeigt in Fig.8 ein Kupplungsgehäuse 20, das aus einem Mittelteil 21 entsprechend dem oben genannten Dämpfergehäuse 1 der Fig. 2 und 3, einem mit der Antriebswelle 23 mittels Schrauben 24 fest verbundenen Boden 22 und einem mit dem Mittelteil 21 verschraubten Deckel 25 besteht. Dieser Deckel 25 ist ringförmig ausgebildet und besitzt einen mittigen, zylindrischen Ansatz 26, dessen Durchmesser größer ist, als der Förderkreis der Zahnradpumpe. In diesem Ansatz 26 ist eine Büchse 28 geführt, die axial verschiebbar auf der das zentrale Stirnzahnrad 32 des Drehschwingungsdämpfers tragenden Abtriebswelle 27 sitzt. Diese Büchse 28 besitzt an ihrem den Stirnzahnrädern 32,33 zugewandten Ende eine die lichte Weite des Ansatzes 26 bedeckende Kolbenplatte 29, die in vorgeschobener (dargestellter), geschlossener Stellung die an den Stirnzahnrädern 32,33 anliegende restliche Wand des Deckels 25 fortsetzt. Die Kolbenplatte 29 hat einen der lichten Weite des Ansatzes 26 entsprechenden Durchmesser. Sie wird normalerweise von einer Druckfeder 34 in Schließstellung gehalten und bildet das Stellglied einer alle Druck- und Saugseiten dieser Zahnradpumpe verbindenden Überdruckventils 31.

Die Büchse 28 ist in geeigneter Weise mit einer Betätigungseinrichtung 30 für die Kupplung verbunden. Dies ist in Fig.8 schematisch wie folgt angegeben: Die Büchse 28 weist an ihrem freien Ende einen Bund 35 auf, an dem ein Hebel 36 eines Kupplungsgestänges 37 angreift, das von einem Pedal 38 aus betätigbar ist.

In der dargestellten Stellung befindet sich die Kupplung in eingekuppeltem Zustand und arbeitet als praktisch verschleißfreie hydraulische Kupplung. Wird nun das Pedal 38 betätigt, - das normalerweise den "Bonanza-Effekt" verursachen würde -, so wird über das Kupplungsgestänge 37 und gegen die Druckfeder 34 die Büchse 28 axial von den Stirnzahnrädern 32,33 abgehoben. Dabei hebt sich auch die Kolbenplatte 29 ab und es ergibt sich eine Kurzschlußverbindung über die gesamte Zahnradpumpe. Die hierdurch erfolgende Überbrückung der Kolbenventile 7 wird aufgehoben, sobald die Kolbenplatte 29 unter Entlastung des Kupplungsgestänges 37 und Wirkung der Druckfeder 34 wieder ihre dargestellte Ausgangsstellung erreicht hat.

Anstelle von fliehkraftbetätigten Kolbenventilen 7 können auch Kolbenventile vorgesehen sein, die als Magnetventile ausgebildet und von einem Bordcomputer oder dgl. eines Fahrzeuges steuerbar sind.

## Patentansprüche

1. Vorrichtung zur Änderung der zeitlichen Durchflußmenge eines flüssigen Dämpfungsmittels bei einem Drehschwingungsdämpfer, insbesondere für Kolbenmotoren, in dessen mit der An- bzw. Abtriebswelle (23,27) verbundenem, umlaufenden zylindrischen Dämpfergehäuse (1) Stirnzahnräder (3) planetenartig gelagert sind und, mit einem auf der Ab- bzw. Antriebswelle (27,23) sitzenden, zentralen Stirnzahnrad (2) in Eingriff stehend, eine Zahnradpumpe für einen geschlossenen Kreislauf des Dämpfungsmittels bilden, mit einer Speicherkammer (13) in der Förderleitung (4) für das Dämpfungsmittel auf der jeweiligen Druckseite,
**dadurch gekennzeichnet**,
daß die Speicherkammer (13) ein elastisch veränderbares Volumen aufweist und in der Druckseite der Förderleitung (4) ein drehzahlabhängig gesteuertes Kolbenventil (7) vorgesehen ist, dessen Kolben (8) geeignet ist, als Drosselstellglied durch seine Axialbewegung den Querschnitt der Förderleitung (4) zu verändern, die koplanar mit den Stirnzahnrädern (2,3) in einem aus Kanälen (17,18,19) bestehenden Kreislauf angeordnet ist.

2. Vorrichtung nach Anspruch 1, **dadurch gekennzeichnet**, daß der Querschnitt der Förderleitung (4) im Bereich jedes Kolbenventils (7) über den Kolbenweg jeweils eine der Dämpfungscharakteristik entsprechende Größe aufweist.

3. Vorrichtung nach einem der Ansprüche 1 oder 2, **dadurch gekennzeichnet**, daß jedes Kolbenventil (7) radial am umlaufenden Dämpfergehäuse (1) befestigt ist, dessen als Fliehgewicht freibeweglicher Kolben (8) gegen eine Rückstellfeder (9) anliegt und eine mittlere Durchtrittsöffnung (10) für das Dämpfungsmittel aufweist und dessen Ventilgehäuse (11) im Anschlußbereich der Förderleitung (4) Durchgangsöffnungen (12,12′,12˝) aufweist, die der bewegte Kolben (8) schließt bzw. mehr oder weniger freigibt.

4. Vorrichtung nach Anspruch 3, **dadurch gekennzeichnet**, daß die Durchgangsöffnungen (12,12′,12˝) im Ventilgehäuse (11) schlitzartige Öffnungen sind.

5. Vorrichtung nach einem der Ansprüche 1 bis 4, **dadurch gekennzeichnet**, daß jedes Kolbenventil (7) ein von einem Bordcomputer oder dgl. eines Fahrzeuges steuerbares Magnetventil ist.

6. Vorrichtung nach einem der Ansprüche 1 bis 5, **dadurch gekennzeichnet**, daß zwischen der Druck- und Saugseite der Förderleitung (4) bzw. ihrer zwischen zwei Stirnzahnradpaaren (2,3;32,33) gelegenen Teilabschnitte (5,6) eine durch ein Überdruckventil (14,31) abgeschlossene, das bzw. die Kolbenventil(e) (7) überbrückende Kurzschlußverbindung (15) vorgesehen ist.

7. Vorrichtung nach Anspruch 6, **dadurch gekennzeichnet**, daß das umlaufende, auf der An- bzw. Abtriebswelle (23,27) des zu dämpfenden Motors sitzende Dämpfergehäuse (1) zugleich das Kupplungsgehäuse (20) für nachgeordnete, angetriebene Einrichtungen bildet und an der nicht mit einer Welle (23,27) verbundenen Seite einen geschlossenen, zylindrischen Ansatz (26) aufweist, dessen Durchmesser größer ist, als der Durchmesser des Förderkreises für das Dämpfungsmittel in der Zahnradpumpe und daß in diesem Ansatz (26) eine gegen eine Rückstellfeder (34) axial von den Stirnzahnrädern (32,33) abhebbare und mit einer Betätigungseinrichtung (30) verbundene Kolbenplatte (29) angeordnet ist, die beim Anliegen an den Stirnzahnrädern (32,33) den Förderkreis des Dämpfungsmittels auf der den Ansatz (26) aufweisenden Seite des Kupplungsgehäuses (20) als dessen mitumlaufender Teil abschließt und das Stellglied eines alle Druck- und Saugseiten verbindenden Überdruckventils (31) bildet.

## Claims

1. Device for modifying the quantity of flow per unit time of a fluid damping medium in a rotational vibration damper, more especially for piston engines, spur gears (3) being mounted in a planetary manner in the circumferential, cylindrical damper housing (1) of said damper, which housing is connected to the drive and driven shafts (23, 27), and when said spur gears engage with a central spur gear (2), which is located on the drive or driven shaft (27, 23) respectively, they form a gear pump for a closed loop of the damping medium, said device having a storage chamber (13) in the feed pipe (4) for the damping medium on the respective pressure side, characterised in that the storage chamber (13) has a resiliently variable volume, and a piston valve (7) is provided in the pressure side of the feed pipe (4) and is controlled in a speed-dependent manner, the piston (8) of said piston valve being suitable, as a throttle adjustment member, for varying the cross-section of the feed pipe (4) by its axial displacement, which feed pipe is disposed in a co-planar manner with the spur gears (2, 3) in a loop comprising ducts (17, 18, 19).

2. Device according to claim 1, characterised in that the cross-section of the feed pipe (4) in the region of each piston valve (7) has, over the piston path, a size corresponding to the respective damping characteristic.

3. Device according to one of claims 1 or 2, characterised in that each piston valve (7) is radially mounted on the circumferential damper housing (1), the piston (8) of said valve being freely displaceable as a centrifugal weight and abutting against a return spring (9), said piston having a central through-aperture (10) for the damping medium, and the valve housing (11) of said piston having through-apertures (12, 12', 12'') in the connection region of the feed pipe (4), which through-apertures are closed or exposed to a greater or lesser extent by the moving piston (8).

4. Device according to claim 3, characterised in that the through-apertures (12, 12', 12'') in the valve housing (11) are slot-like apertures.

5. Device according to one of claims 1 to 4, characterised in that each piston valve (7) is a solenoid valve, which is controllable by a built-in computer or similar means of a vehicle.

6. Device according to one of claims 1 to 5, characterised in that a short-circuit connection (15), which is terminated by an excess-pressure valve (14, 31) and spans the piston valve or valves (7), is provided between the pressure side and suction side of the feed pipe (4), or respectively its portions (5, 6) situated between two pairs of spur gears (2, 3; 32, 33).

7. Device according to claim 6, characterised in that the circumferential damper housing (1), located on the drive and driven shafts (23, 27) of the engine to be damped, also forms the clutch housing (20) for subsequently disposed, driven means and has a self-contained, cylindrical extension member (26) on the side not connected to a shaft (23, 27), the diameter of said extension member being greater than the diameter of the feed cycle for the damping medium in the gear pump, and in that a piston plate (29), which is axially raisable from the spur gears (32, 33) in opposition to a return spring (34) and is connected to an actuating means (30), is disposed in said extension member (26) and terminates the feed cycle of the damping medium on the side of the clutch housing (20) having the extension member (26) as its jointly circumferential member upon abutment against the spur gears (32, 33) and forms the adjustment member of an excess-pressure valve (31), which connects all of the pressure and suction sides.

## Revendications

1. Dispositif pour modifier le débit d'un fluide d'amortissement liquide pour un amortisseur de vibrations torsionnelles, en particulier pour des moteurs à piston, dans le boîtier (1) relié aux arbres menant et mené (23,27), rotatif et cylindrique, duquel amortisseur de vibrations torsionnelles, des roues dentées frontales (3) sont montées de façon planétaire, et comportant une roue dentée frontale centrale (2), en engagement, montée sur les arbres menant et mené (23,27), une pompe à roue dentée pour un circuit fermé du fluide d'amortissement, comportant une chambre de stockage (13) dans la conduite d'alimentation (4) pour le fluide d'amortissement sur la face de pression correspondante,
caractérisé en ce que la chambre de stockage (13) présente un volume élastiquement modifiable et une soupape à piston (7) commandée de façon dépendant de la vitesse de rotation est prévue dans la face de pression de la conduite d'alimentation (4), dont le piston (8) est approprié, en tant qu'élément de réglage par étranglement pour modifier, par son mouvement axial, la section transversale de la conduite d'alimentation (4), qui est agencée de façon coplanaire avec les roues dentées frontales (2,3) dans un circuit constitué de canaux (17,18,19).

2. Dispositif selon la revendication 1,
caractérisé en ce que la section transversale de la conduite d'alimentation (4) présente, dans la zone de chaque soupape à piston (7), le long de la course du piston, à chaque fois, l'une des grandeurs correspondant à la caractéristique d'amortissement.

3. Dispositif selon l'une des revendications 1 ou 2,
caractérisé en ce que chaque soupape à piston (7) est fixée radialement au boîtier rotatif (1), dont le piston (8) pouvant se déplacer librement en tant que masselotte repose contre un ressort de rappel (9) et présente une ouverture de passage centrale (10) pour le fluide d'amortissement et dont le boîtier de soupape (11) présente dans la zone de raccord de la conduite d'alimentation (4) des ouvertures de passage (12,12',12'') que le piston mobile (8) ferme ou libère plus ou moins.

4. Dispositif selon la revendication 3,
caractérisé en ce que les ouvertures de passage (12,12',12'') dans le boîtier de soupape (11) sont des ouvertures en forme de fentes.

5. Dispositif selon l'une des revendications 1 à 4,
caractérisé en ce que chaque soupape à piston (7) est une soupape magnétique commandable d'un ordinateur de bord ou analogue d'un véhicule.

6. Dispositif selon l'une des revendications 1 à 5,
caractérisé en ce qu'entre la face de pression et la face d'aspiration de la conduite d'alimentation (4) ou ses sections partielles (5,6) disposées entre deux paires de roues dentées frontales (2,3;32,33), une liaison de court-circuit (15), fermée par une soupape de surpression (14,31) et court-circuitant la ou les soupape(s) à piston (7), est prévue.

7. Dispositif selon la revendication 6,
caractérisé en ce que le boîtier (1) rotatif, monté sur les arbres menant et mené (23,27) du moteur devant être amorti, forme simultanément le boîtier de couplage (20) pour des dispositifs agencés en aval et entraînés, et présente une pièce rapportée fermée cylindrique (26) sur la face non reliée à un arbre (23,27), pièce dont le diamètre est plus grand que le diamètre du circuit d'alimentation pour le fluide d'amortissement dans la pompe à roue dentée, et en ce que, dans cette pièce (26), est agencée une plaque de piston (29), pouvant être soulevée axialement des roues dentées frontales (32,33) contre un ressort de rappel (34) et reliée à un dispositif d'actionnement (30), plaque de piston qui, lorsqu'elle repose contre les roues dentées frontales (32,33), referme le circuit d'alimentation du fluide d'amortissement sur la face du boîtier de couplage (20), présentant la pièce (26), en tant que sa partie rotative, et forme l'élément de réglage d'une soupape de surpression (31) reliant toutes les faces de pression et d'aspiration.
